# EUROPÄISCHE PATENTSCHRIFT

(11) **EP 2 313 303 B1**
(45) Veröffentlichungstag und Bekanntmachung des Hinweises auf die Patenterteilung: **26.02.2014**
(21) Anmeldenummer: 09780808.3
(22) Anmeldetag: 20.07.2009
(51) Int. Cl.: B62D 33/02

(54) **RUNGE MIT EINER RIEGELEINRICHTUNG**
STANCHION WITH A LOCKING DEVICE
RANCHER AVEC DISPOSITIF DE VERROUILLAGE

(30) Priorität: 22.07.2008 DE 202008009871 U
(43) Veröffentlichungstag der Anmeldung: 27.04.2011
(73) Patentinhaber: Load-Lok Deutschland GmbH, 48683 Ahaus (DE)
(72) Erfinder: THIEME, Jürgen, 37308 Heilbad Heiligenstadt (DE); DÖNNEBRINK, Andreas, 59348 Lüdinghausen (DE); KUNSTLEBEN, Klaus, 48727 Billerbeck (DE)
(74) Vertreter: Linnemann, Winfried
(86) Internationale Anmeldenummer: PCT/EP2009/059274
(87) Internationale Veröffentlichungsnummer: WO 2010/010053

(56) Entgegenhaltungen:
- EP-A- 0 335 427
- EP-A- 0 426 484
- EP-A- 0 825 050
- EP-A- 1 112 917
- EP-A- 1 852 336

## Beschreibung

Die vorliegende Erfindung betrifft eine Runge eines Transportfahrzeugs, mit einem oberen Rungenende, das an einer seitlichen Kante eines oberen Aufbauteils des Transportfahrzeugs verschiebbar gehaltert ist, und mit einem Rungenfuß zur Zusammenwirkung mit einem Rungenschuh, der an einer seitlichen Kante eines unteren Aufbauteils des Transportfahrzeugs angeordnet ist, wobei der Rungenfuß mit einer Riegeleinrichtung am Rungenschuh verriegelbar ist, wobei an der Runge ein relativ zu dieser verschwenkbarer zweiarmiger Riegelhebel mit einem Eingriffsarm und einem Betätigungsarm angelenkt ist, wobei der Riegelhebel unmittelbar am Rungenfuß auf einer an diesem angebrachten Achse schwenkbar gelagert ist, wobei an dem Eingriffsarm mindestens eine Riegelnase ausgebildet ist, die in eine korrespondierende Aufnahme im Rungenschuh in Eingriff bringbar ist, und wobei am Rungenschuh und am Rungenfuß Verriegelungsführungen ausgebildet sind, die durch Verschwenken des Riegelhebels in einer Verriegelungsrichtung unter Anheben der Runge in gegenseitigen Eingriff bringbar und durch Verschwenken des Riegelhebels in einer Entriegelungsrichtung unter Absenken der Runge außer Eingriff bringbar sind.

Rungen der vorstehend angegebenen Art dienen zur seitlichen Absicherung einer Ladung, die in dem Aufbau des Transportfahrzeugs, wie Lastkraftwagen, Anhänger oder Transportbehälter, angeordnet ist. Zum Be- und Entladen des Laderaums werden die an der oberen seitlichen Kante des Aufbaus an einem Rungenwagen gehalterten Rungen entriegelt und in Längsrichtung des Transportfahrzeugs verschoben. An dem Rungenwagen sind die Rungen mit einem oberen Ende vorzugsweise schwenkbeweglich gelagert, so dass sie im Wesentlichen quer zur Fahrzeuglängsachse nach außen vom Aufbau weg verschwenkt werden können. Ein Längen- oder Höhenausgleich kann beispielsweise über eine entsprechende Mechanik am Rungenwagen, an der der Rungenkörper aufgehängt ist, ausgeführt werden oder der Rungenkörper selbst ist in entsprechendem Maß teleskopierbar.

Eine Runge der eingangs genannten Art ist aus EP 0 335 427 A1 bekannt. Bei dieser bekannten Runge ist die Handhabung insbesondere beim Verriegelungsvorgang relativ kompliziert, weil beim Verriegeln der Runge deren unteres Ende manuell gegen ein entlang der seitlichen Kante der Ladefläche des Transportfahrzeugs verlaufendes Halteprofil gedrückt werden muss, damit ein Haken am Rungenfuß beim Verschwenken des Riegelhebels sicher in Halteeingriff mit einer Halterippe am Halteprofil gelangt.

Die EP 1 112 917 A2 beschreibt eine Runge, welche ein Langloch aufweist, hier jedoch in einem Verriegelungskeil. Das Langloch dient hier dazu, dass, wenn ein Betätigungshebel nach unten geklappt wird, der Verriegelungskeil in einer Tasche am Rungenfuß verschoben werden kann, um die Runge im geschlossenen Zustand festzuhalten.

Eine weitere Runge ist aus EP 0 941 195 B1 bekannt. Bei dieser bekannten Runge ist die Achse, um die der Riegelhebel verschwenkbar ist, am einen Ende eines stangenförmigen Verbindungsgliedes angebracht. Das andere Ende des Verbindungsgliedes ist mit Abstand oberhalb des Rungenfußes mit der Runge gelenkig verbunden. Der Rungenschuh ist als nach unten offene Gabel ausgeführt und der Rungenfuß besitzt einen zur Verriegelung vertikal von unten nach oben in die Gabel einführbaren, zwischen Seitenflanschen der Runge angebrachten Riegelbolzen. Als nachteilig ist bei der Handhabung dieser Runge festzustellen, dass deren Rungenfuß vor einem Verriegeln von einer Bedienungsperson bis unmittelbar an den Rungenschuh gedrückt werden muss. Hierfür ist oft ein erheblicher Kraftaufwand nötig. In Fällen einer ungenauen Beladung kann sogar durch einen geringen Überstand der Ladung über die Ladefläche nach außen dieses Herandrücken unmöglich gemacht werden. In solchen Fällen ist dann z.B. der Einsatz eines Gabelstaplers zum Korrigieren der Lage der Ladung nötig. Weiterhin ist als nachteilig anzusehen, dass die Riegeleinrichtung relativ viele Einzelteile und zwei verschleißbehaftete gelenkige Verbindungen aufweist, was die Fertigung und Wartung aufwendig macht.

Noch eine weitere Runge ist aus DE 20 2008 000 812 U1 bekannt, wobei dort die Riegeleinrichtung am Rungenschuh angeordnet ist. Zur Fixierung der Runge an einer gewünschten Position ist ein Rungenfuß mittels einer Riegeleinrichtung an einem Rungenschuh verriegelbar. Der Rungenschuh ist dabei an einer seitlichen Kante eines unteren Aufbauteils des Transportfahrzeugs angeordnet und kann gegebenenfalls in seiner Position in Fahrzeuglängsrichtung verschiebbar sein.

Eine Runge mit einem starren Rungenkörper ist aus DE 10 2005 033 319 A1 bekannt, bei der die Riegeleinrichtung einen um eine in Fahrzeugslängsrichtung verlaufende Achse verschwenkbaren Riegelhebel umfasst, der über ein mechanisch aufwändiges Kniehebelgelenk angelenkt ist, so dass der Fertigungsaufwand sowie das Gesamtgewicht einer solchen Runge erhöht sind.

Weiterhin offenbart EP 0 005 120 A1 eine Runge mit einem verschwenkbaren Riegelhebel, der zum Entriegeln aus einer im Wesentlichen vertikalen Position nach oben verschwenkbar ist. Im verriegelten Zustand steht ein Rastvorsprung am Rungenfuß mit einer taschenartigen Rastausnehmung am Rungenschuh in Eingriff. Allerdings sind auch hier zusätzliche Hebel und eine aufwändige Verschwenkmechanik für den Riegelhebel vorgesehen, was die Verriegelung aufwendig und teuer macht.

Für die vorliegende Erfindung stellt sich daher die Aufgabe, eine Runge der eingangs genannten Art zu schaffen, die die vorstehend genannten Nachteile vermeidet und die insbesondere einen vereinfachten mechanischen Aufbau mit geringerem Herstellungs- und Montageaufwand besitzt, die ein geringeres Gewicht aufweist und die einfach und sicher handhabbar ist.

Die Lösung dieser Aufgabe gelingt erfindungsgemäß mit einer Runge der eingangs genannten Art, die dadurch gekennzeichnet ist, dass im Riegelhebel ein eine Verlagerung des Riegelhebels in seiner Längsrichtung relativ zu der Achse ermöglichendes Langloch ausgebildet ist, durch welches die Achse verläuft.

Mit der Erfindung wird eine Runge geschaffen, die lediglich eine einzige bewegliche Komponente aufweist, nämlich den verschwenkbaren Riegelhebel. Somit ist der mechanische Aufbau der Runge wesentlich vereinfacht, da nur noch eine einzige Achse für den Riegelhebel erforderlich ist. Aufgrund des Langlochs kann der Riegelhebels nicht nur relativ zu der Achse verschwenkt, sondern zusätzlich in seiner Längsrichtung relativ zu der Achse verschoben werden. Diese Verschiebbarkeit erleichtert die Handhabung der Runge insbesondere bei deren Verriegelung, weil nun ermöglicht wird, dass die Riegelnase am Ende des Eingriffsarms des Riegelhebels schon in eine eingriffsgerechte Position zu der korrespondierenden Aufnahme im Rungenschuh gebracht werden kann, bevor der Rungenfuß sich in Anlage an dem Rungenschuh befindet. Mittels der Schwenkbewegung des Riegelhebels in Verriegelungsrichtung wird dann der Rungenfuß zwangsweise in Richtung zum Rungenschuh bewegt und verriegelt. Bei der Schwenkbewegung des Riegelhebels bildet dessen Langloch eine schiefe Ebene, auf der sich die Runge mit ihrem Rungenfuß in Richtung zum Rungenschuh gleitend bewegt. Bei geeigneter Auslegung der Hebelarmverhältnisse des Riegelhebels kann dabei sogar eine überstehende Ladung in Richtung zum Laderauminneren gedrückt werden. Zudem trägt der vereinfachte Aufbau zu einem geringen Gesamtgewicht einer Runge bei.

Weiter ist bevorzugt vorgesehen, dass die Riegelnase hakenförmig gebogen ist und die Aufnahme eine korrespondierende Bogenform aufweist. Dabei ist die am Rungenfuß ausgebildete Riegelnase derart gekrümmt ausgebildet, dass sie durch das Verschwenken des Riegelhebels in die korrespondierend ausgebildete Aufnahme im Rungenschuh im Wesentlich spielfrei eingeführt und in Eingriff gebracht werden kann. Zusätzlich sind am Rungenschuh und am Rungenfuß die miteinander korrespondierenden Verriegelungsführungen ausgebildet, die beim Verriegeln, d.h. beim Schwenken des Riegelhebels in Verriegelungsrichtung, in gegenseitigen Eingriff gebracht werden.

Vorzugsweise sind am Riegelhebel mit Abstand nebeneinander zwei Riegelnasen und im Rungenschuh mit Abstand nebeneinander zwei Aufnahmen angeordnet. Somit sind die Halte- bzw. Hebelkräfte auf mindestens zwei Bauteile verteilt. Zudem wird mit den beiden Riegelnasen eine lagerichtige Ausrichtung der-Runge relativ zum Rungenschuh erreicht, da beide Riegelnasen jeweils in eine korrespondierende Aufnahme eingreifen.

Weiter ist vorgesehen, dass zwischen den zwei Aufnahmen am Rungenschuh ein Steg ausgebildet ist, der an seiner dem Rungenfuß zugewandten Seite eine Verbreiterung mit seitlichen konischen Einlaufschrägen aufweist. Der Steg dient zur Ausrichtung der Runge relativ zum Rungenschuh und er vereinfacht die Zentrierung bzw. Ausrichtung der Runge beim Verriegeln.

Zur Erleichterung des Einführens der Riegelnasen in die korrespondierenden Aufnahmen im Rungenschuh sind vorzugsweise an den Aufnahmen trichterförmige Einlaufbereiche ausgebildet. Ergänzend können die Riegelnasen an ihrem freien Ende zugespitzt sein, was das Einführen weiter erleichtert.

Gemäß Erfindung ist bevorzugt vorgesehen, dass die Verriegelungsführungen schräg von unten außen nach oben innen verlaufen. Diese Ausrichtung der Verriegelungsführungen sorgt dafür, dass beim Verriegeln der Runge der Rungenfuß relativ zum ortsfesten Rungenschuh zwangsgeführt nicht nur angehoben sondern auch in Richtung zum Rungenschuh hin bewegt wird. Werden während des normalen Transportbetriebs von der Ladung in horizontaler Richtung Kräfte auf die seitlich angeordneten Rungen ausgeübt, d. h. drückt die Ladung gegen die Runge nach außen, so wirken diese Kräfte nicht unmittelbar auf die Riegelnase oder Riegelnasen ein, sondern werden im Wesentlichen vom Rungenfuß über die Verriegelungsführungen in den Rungenschuh und in den Aufbau des Transportfahrzeugs abgeleitet. Auch an den Verriegelungsführungen können trichterförmige Einlaufbereiche ausgebildet sein, um das gegenseitige Ineingriffbringen zu erleichtern.

Bevorzugt sind die Verriegelungsführungen in Form von Nuten und Federn ausgeführt. Dabei ist insbesondere aus Fertigungsgründen ein geradliniger Verlauf der Nuten und Federn zweckmäßig.

In bevorzugter weiterer Ausgestaltung der Erfindung sind der Rungenfuß, der Rungenschuh und der Riegelhebel oder wenigstens dessen Eingriffsarm Metallgussteile, insbesondere Feingussteile, und/oder gefräste Metallteile. Hiermit können eine hohe Festigkeit und eine über eine lange Verwendungsdauer ausreichende Verschleißfestigkeit gewährleistet werden. Als Metalle kommen z.B. Stahl, Eisen oder Aluminium in Frage.

Zur Erhöhung der Sicherheit der Verriegelung ist in der Verriegelungsstellung, in der der Riegelhebel im Wesentlichen vertikal nach oben hin verschwenkt ist, eine zusätzliche mechanische Sicherung zum Festlegen des Riegelhebels in seiner Verriegelungsstellung vorgesehen. Die Sicherung kann beispielsweise eine Rasteinrichtung oder eine durch eine Bedienungsperson lösbare, federbelastete Sperre sein, um den Riegelhebel in der Verriegelungsposition lösbar zu arretieren. In dieser Position kann der Riegelhebel in einer Ausnehmung oder Eintiefung im Rungenkörper angeordnet sein, um nicht störend über die Kontur der Runge überzustehen.

Ein weiterer Beitrag zu einem geringen Gewicht der Runge bei hoher mechanischer Stabilität besteht darin, dass bevorzugt der Rungenkörper aus einem einstückigen Kant- oder Rollprofil mit einem C-förmigen, zum Fahrzeuginneren hin offenen Querschnitt gebildet ist, wobei ein außen liegender Rückenteil des Rungenkörpers zum Fahrzeuginneren hin eingezogen oder eingedrückt ist und wobei zwei freie Kanten des Rungenkörpers zum Rungeninneren hin ein- oder umgebogen sind. Ein solcher Rungenkörper ist leicht und stabil und kostengünstig in einem automatisierten Fertigungsprozess aus einem Stahlblechzuschnitt herstellbar.

Vorteilhaft ist vorgesehen, dass an dem Rungenkörper seitlich in einem Raster Bohrungen angebracht sind und dass eine oder mehrere Lattentaschen mittels mit ausgewählten Bohrungen zusammenwirkender Verbindungsmittel an dem Rungenkörper befestigbar oder befestigt sind. Die Runge kann auf diese Weise schon bei ihrer Herstellung oder alternativ später mit Lattentaschenversehen werden, ohne dass dann noch Bohrungen angebracht werden müssen. Durch das Raster, in dem die Bohrungen angebracht sind, können verschiedene Lattentaschen in verschiedenen Höhenlagen an der Runge angebracht werden. In die Lattentaschen können dann von oben her im Wesentlichen horizontal in Fahrzeuglängsrichtung verlaufende Latten, beispielsweise aus Holz, als Ladungssicherungsmittel eingesetzt werden. Nach außen wird ein derartiger Fahrzeugaufbau üblicherweise mit einer Schiebeplane abgedeckt.

Zur Befestigung am unteren Aufbauteil des Transportfahrzeugs können die Rungenschuhe angeschraubt und/oder angenietet und/oder angeschweißt sein. Dabei sind mehrere Rungenschuhe entlang des Fahrzeugaufbaus bevorzugt äquidistant verteilt angeordnet oder sie sind an einem in Längsrichtung des Fahrzeugaufbaus verlaufenden Profil verschiebbar und arretierbar gehaltert, beispielsweise mittels Klemmverschraubungen.

Ausführüngsbeispiele der Erfindüng werden im Folgenden anhand einer Zeichnung näher erläutert. Die Figuren der Zeichnung zeigen:
- Figur 1: den unteren Teil einer Runge mit einem in einem Rungenschuh verriegelten Rungenfuß mit Riegelhebel, in Schrägansicht von vorne,
- Figur 2: -den Rungenfuß mit- Riegelhebel und den Rungenschuh beim Entriegeln der Riegeleinrichtung, in Schrägansicht von hinten,
- Figur 3: den Rungenschuh als Einzelteil in Schrägansicht von vorne,
- Figur 4 bis 9: den Rungenfuß mit Riegelhebel und den Rungenschuh in verschiedenen Stufen beim Verriegeln der Riegeleinrichtung, jeweils links im Vertikalschnitt und rechts in Schrägansicht von außen, und
- Figur 10 und 11: einen Rungenkörper der Runge in zwei Ausführungen, jeweils in Draufsicht auf ein Stirnende.

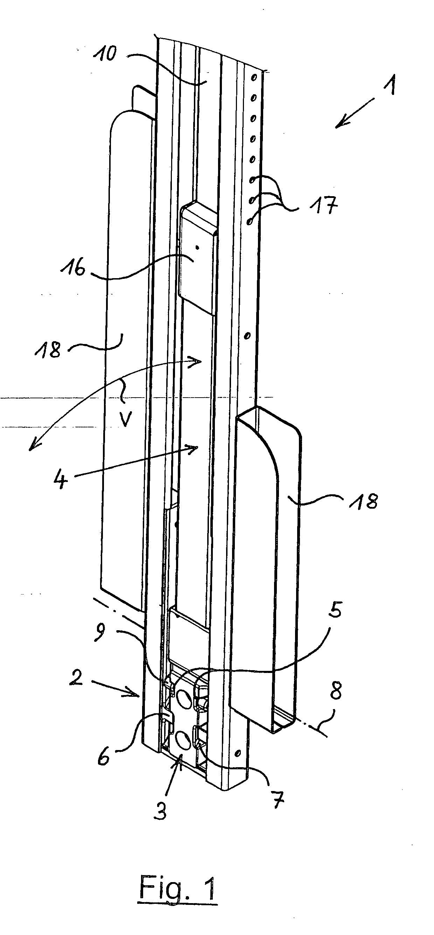

In Figur 1 ist ein unterer Teil einer Runge 1 mit einem länglichen Rungenkörper 10, beispielsweise ein Kant- oder Rollprofil aus Stahlblech, in perspektivischer Darstellung in einer Schrägansicht von außen, also auf die von einem zugehörigen, nicht gezeigten Transportfahrzeug abgewandte Seite, abgebildet. Die Runge 1 befindet sich hier in einem verriegelten Zustand.

Am ihrem unteren Ende weist die Runge 1 einen Rungenfuß 2 auf, der mit einem Riegelhebel 4 ausgestattet ist. Der Riegelhebel 4 ist um eine im Wesentlichen in Fahrzeuglängsrichtung horizontal verlaufende Achse 8 nach außen und unten hin verschwenkbar, wie durch den Pfeil V angedeutet, um die Runge 1 zu entriegeln. Zum Verriegeln wird der Riegelhebel 4 in Gegenrichtung verschwenkt. Dabei gelangen der Rungenfuß 2 und der Riegelhebel 4 außer bzw. in Eingriff mit einem Rungenschuh 3, der seinerseits an einer seitlichen Kante eines unteren Aufbauteils des nicht dargestellten Transportfahrzeugs angeordnet, z.B. angeschraubt, angenietet oder angeschweißt, ist

Der Rungenkörper 10 ist oben an einem zur Vereinfachung der Darstellung hier nicht abgebildeten, an sich bekannten Rungenwagen höhenverschiebbar und nach außen hin schwenkbeweglich aufgehängt, wobei der Rungenwagen selbst an einem entsprechenden Profil in Fahrzeuglängsrichtung verschiebbar aufgehängt ist.

Der Rungenfuß 2 ist hier ein Fräs- oder Gussteil aus Metall und mit dem Rungenkörper 10, der hier ein Kant- oder Rollprofil aus Blech ist, starr verbunden.

Zur Arretierung des Riegelhebels 4 in der vertikal nach oben ausgerichteten Verriegelungsposition in Figur 1 ist eine zusätzliche mechanische Sicherung 16 für den Riegelhebel 4 am Rungenkörper 10 vorgesehen. Die Sicherung 16 besteht hier aus einer federbelasteten Rastsperre, die von einer Bedienungsperson gegen die Federkraft manuell in eine Entsicherungsstellung überführbar ist, in der der Riegelhabel 4 aus seiner Verriegelungsposition heraus verschwenkt werden kann.

Links und rechts an Schmalseiten des Rungenkörpers 10 sind Bohrungen 17 in einem Raster angebracht, um Lattentaschen 18, auch unterschiedlicher Höhen, in gewünschten Höhenlagen einfach und ohne nachträgliche Bohrarbeiten an der Runge 1 anbringen zu können.

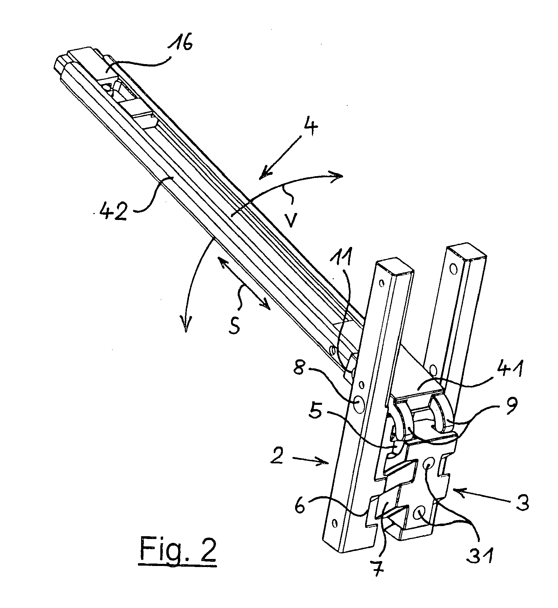

Wie die Figur 2 zeigt, ist der Riegelhebel 4 ein zweiarmiger Hebel mit einem kürzeren Eingriffsarm 41 und einem längeren Betätigungsarm 42. Zur Aufnahme der Achse 8 ist im Riegelhebel 4 ein Langloch 11 angebracht, welches ein Verschieben des Riegelhebels 4 in seiner Längsrichtung relativ zu der Achse 8 erlaubt.

Am freien Ende des Eingriffsarms 41 sind zwei parallele, gebogene Riegelnasen 9 angeformt, die mit korrespondierenden Aufnahmen 5 im Rungenschuh 3 zusammenwirken. In Figur 2 ist der Riegelhebel 4 aus der Verriegelungsposition gemäß Figur 1 nach außen und unten hin verschwenkt, so dass die Riegelnasen 9 bereits weitgehend außer Eingriff mit den Aufnahmen 5 im Rungenschuh 3 gebracht sind. Dabei sind die Riegelnasen 9 sowie die Aufnahmen 5 derart gebogen ausgebildet, dass durch das Verschwenken des Riegelhebels 4 die Riegelnasen 9 im Wesentlichen spielfrei in die Aufnahmen 5 eingeführt bzw. aus diesen herausbewegt werden können.

Der Eingriffsarm 41 des Riegelhabels 4 ist hier ein Fräs- oder Gussteil aus Metall, während der Betätigungsarm 42 hier aus einem Blechprofil gebildet und mit dem Eingriffsarm 41 starr verbunden ist.

Zusätzlich sind am Rungenschuh 3 sowie am Rungenfuß 2 jeweils Verriegelungsführungen 6 und 7, hier in Form von schräg verlaufenden, zusammenwirkenden Nuten und Federn, ausgebildet. Wie durch den Doppelpfeil S in Figur 2 verdeutlicht, wird dabei der Rungenfuß 2 relativ zu dem ortsfest am Transportfahrzeug angeordneten Rungenschuh 3 beim Entriegeln der Runge 1 schräg nach unten außen und bei Verriegeln der Runge 1 schräg nach oben innen verlagert.

Am freien Ende des Betätigungsarms 42 des Riegelhebels 4 ist die mechanische Sicherung 16 für die Arretierung des Riegelhebels 4 in seiner Verriegelungsposition sichtbar. Die Sicherung 16 besteht hier aus einer gegen eine Federkraft verschiebbaren Rastsperre, die zum Lösen des Riegelhebels 4 manuell in dessen Längsrichtung eingedrückt werden kann.

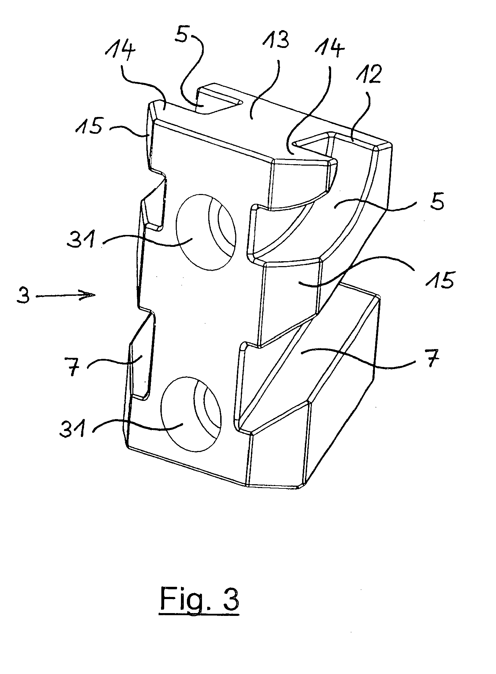

In Figur 3 ist der Rungenschuh 3 als Einzelteil dargestellt. Er besitzt oben links und rechts die zwei symmetrisch ausgebildeten, gebogenen Aufnahmen 5, mit denen gemäß Figur 2 die zwei Riegelnasen 9 des Riegelhebels 4 in Eingriff gebracht werden können. Die Einlaufbereiche 12, in die von oben her die Riegelnasen 9 eingeführt werden, sind trichterförmig ausgebildet, um geringfügige Abweichungen von der exakten Ausrichtung der Riegelnasen 9 und der Aufnahmen 5 relativ zueinander auszugleichen.

Zwischen den Aufnahmen 5 liegt ein stabiler Steg 13, der vorderseitig mit einer verbreiterung 14 mit konischen Einlaufschrägen 15 ausgebildet ist, um das Zusammenführen von Rungenfuß 2 und Rungenschuh 3 zu erleichtern. Im Steg 13 sind hier zwei Bohrungen 31 mit Abstand übereinander angebracht, die zum Hindurchführen von Schrauben zum Befestigen des Rungenschuhs 3 am Fahrzeugaufbau dienen. Der Rungenschuh 3 ist hier ein Fräs- oder Gussteil aus Metall.

Weiterhin ist in Figur 3 ersichtlich, dass die Verriegelungsführungen 7 am Rungenschuh 3. ebenso wie die korrespondierenden Verriegelungsführungen 6 am Rungenfuß 2 gemäß Figur 2, geradlinig schräg von unten außen nach oben innen verlaufend angeordnet sind.

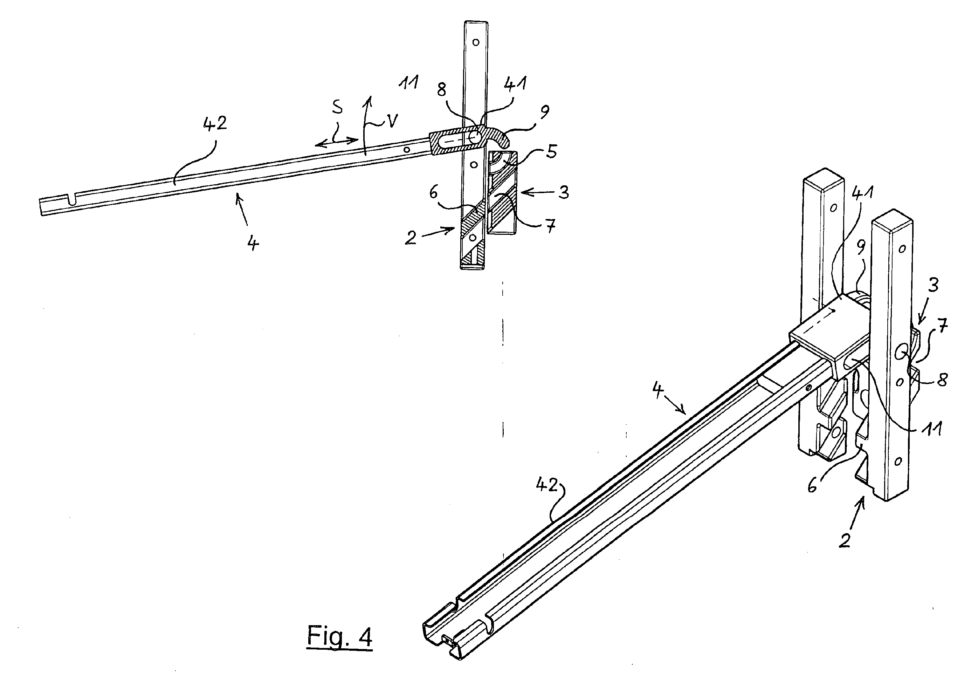

Die Figuren 4 bis 9 zeigen den Ablauf eines Verriegelüngsvörganges der Runge 1 in verschiedenen Stufen, wobei jeweils rechts eine Ansicht und links ein Vertikalschnitt dargestellt ist.

In Figur 4 ist die Verriegelung noch vollständig gelöst, wobei der Rungenfuß 2 und der Rungenschuh 3 voneinander getrennt sind. Zu Beginn des Verriegelungsvorganges ergreift eine Bedienungsperson den Betätigungsarm 42 des Riegelhebels 4 und bringt dessen Eingriffsarm 41 mit den Riegelnasen 9 in eine eingriffsgerechte Position relativ zu den Aufnahmen 5 im Rungenschuh 3, wie in Figur 4 gezeigt. Wie besonders deutlich der Schnitt zeigt, kann zur Herstellung dieser eingriffsgerechten Position des Riegelhabels 4 dieser bei Bedarf, d. h. insbesondere bei einem Abstand zwischen Rungenfuß 2 und Rungenschuh 3 parallel zur Zeichnungsbene, in dem durch das Langloch 11 vorgegebenen Maße in seiner Längsrichtung verschoben werden.

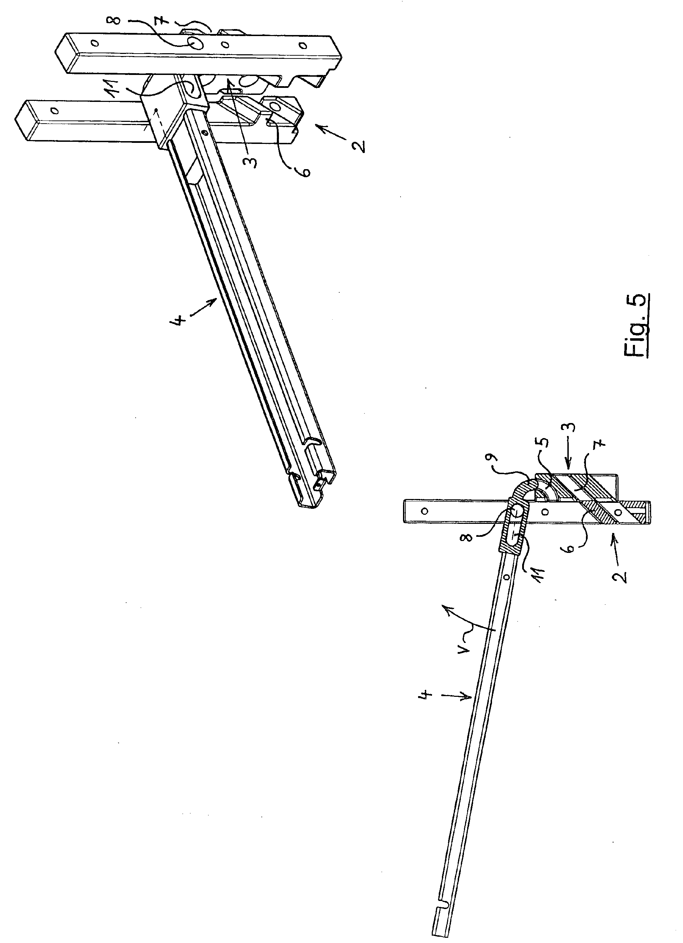

In Figur 5 ist der Riegelhebel 4 um einen gewissen Winkel in Verriegelungsrichtung, d. h. nach oben, verschwenkt. Hierdurch gelangen die Riegelnasen 9 in einen beginnenden Eingriff mit den Aufnahmen 5. Außerdem wird, sofern nicht schon vorher geschehen, nun spätestens der Rungenfuß 2 zwangsweise in Richtung zum Rungenschuh 3 bewegt, wobei das Langloch 11 eine schräge Gleitebene dafür bildet.

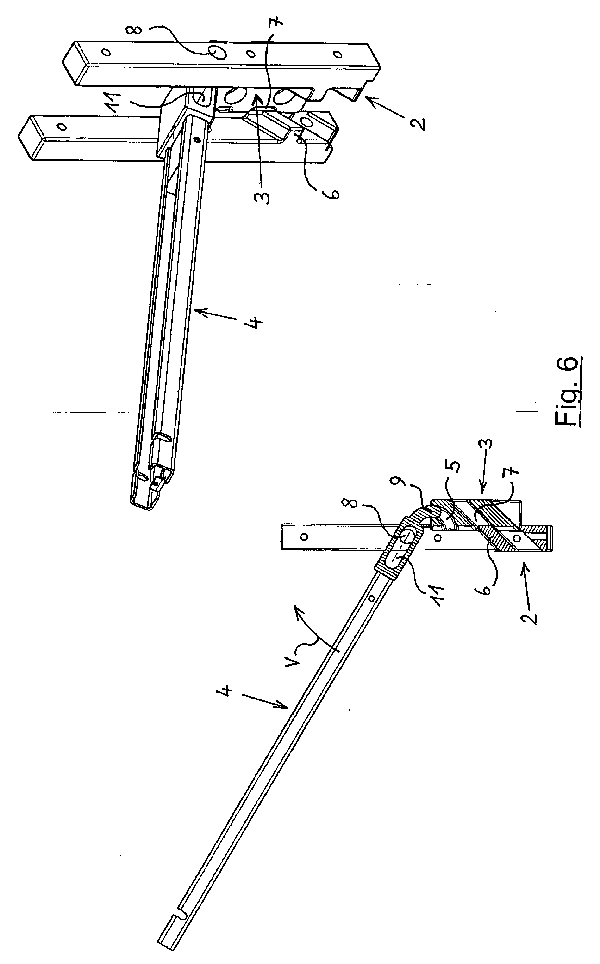

In Figur 6 ist der Riegelhebel 4 um einen gewissen weiteren Winkel in Verriegelungsrichtung verschwenkt. Hierdurch gelangen die Riegelnasen 9 in weiteren Eingriff mit den Aufnahmen 5 und es beginnt ein Anheben des Rungenfußes 2 relativ zum Rungenschuh 3. Dabei treten die schräg verlaufenden Verriegelungsführungen 6 und 7 am Rungenfuß 2 und am Rungenschuh 3 in einen beginnenden Eingriff miteinander.

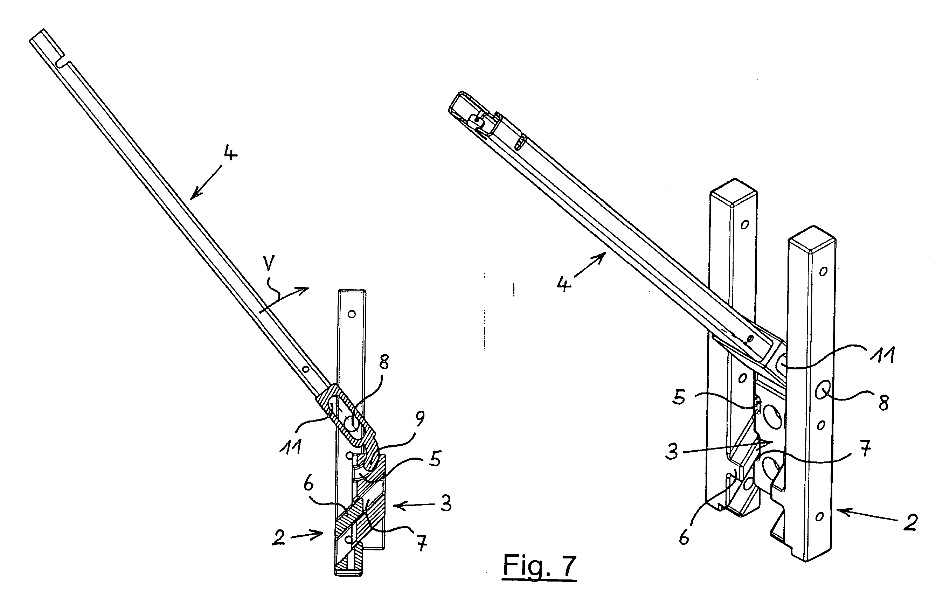

Nach einer weiteren Verschwenkung des Riegelhebels 4 ergibt sich der Zustand gemäß Figur 7. Hier ist nun der Eingriff zwischen den Riegelnasen 9 und den Aufnahmen 5 und zwischen den Verriegelungsführungen 6 und 7 am Rungenfuß 2 und am Rungenschuh 3, ebenso wie das Anheben des Rungenfußes 2, weiter vorangeschritten.

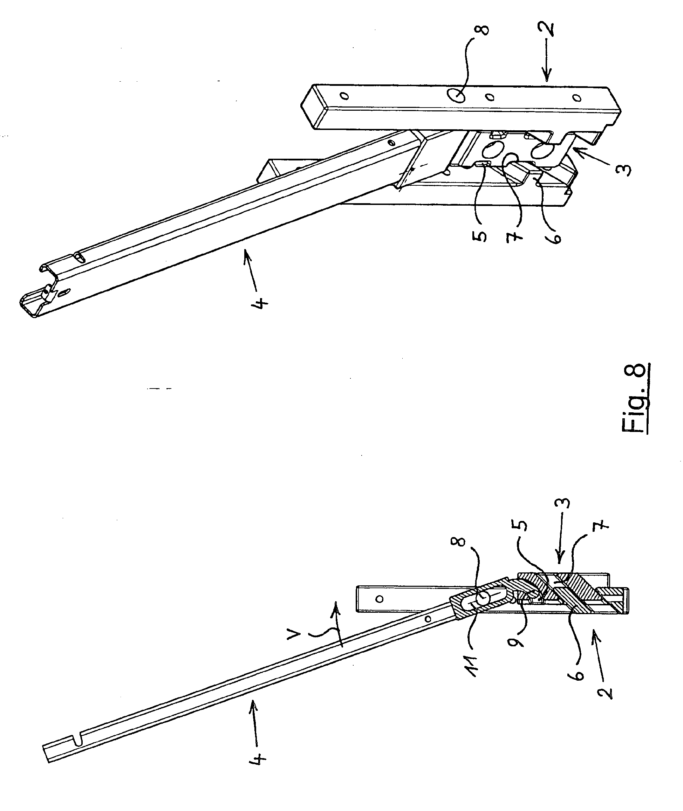

In Figur 8 ist der Riegelhebel 4 annähernd in Verriegelungsrichtung verschwenkt. Hierdurch gelangen die Riegelnasen 9 in weitgehenen Eingriff mit den Aufnahmen 5 und die Verriegelungsführungen 6 und 7 in weitgehenen Eingriff miteinander.

Dabei übt während der Verschwenkungsbewegung der Riegelhebel 4 über die Achse 8 im Langloch 11 auf den Rungenfuß 2 eine diesen zum Rungenschuh 3 hin bewegende Kraft aus, während die schräg verlaufenden Verriegelungsführungen 6 und 7 für das gleichzeitige Anheben des Rungenfußes 2 und damit der gesamten Runge 1 sorgen.

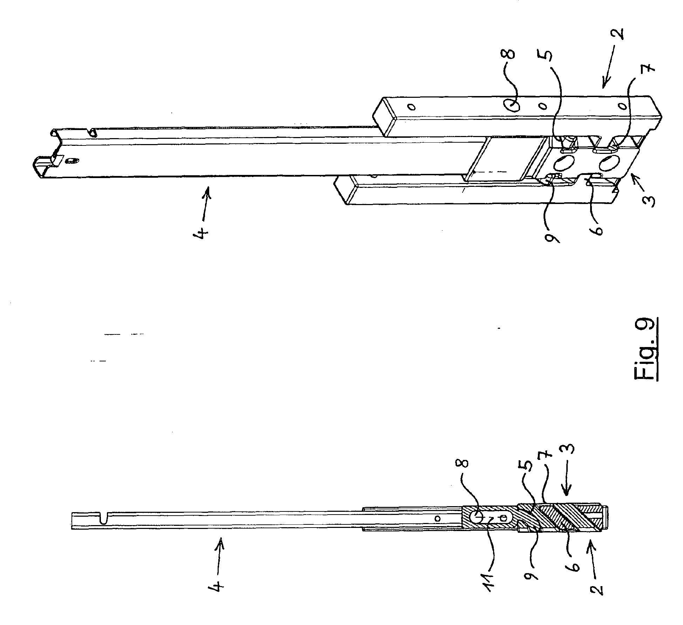

In Figur 9 ist schließlich die vollständig verriegelte Position der Runge 1 bzw. des Rungenfußes 2 relativ zum Rungenschuh 3 abgebildet. Der Riegelhebel 4 ist nun in eine nach oben weisende vertikale Position, die der Verriegelungsposition entspricht, verschwenkt. Dabei sind die Riegelnasen 9 vollständig in die Aufnahmen 5 hineinbewegt und die Verriegelungsführungen 6und 7 stehen vollständig in Eingriff miteinander. Durch die oben schon erwähnte Sicherung 16 gemäß Figur 1 und 2 wird der Riegelhebel 4 in dieser Position arretiert, sodass ein selbsttätiges Entriegeln ausgeschlossen ist.

Von einer Ladung bei Bewegungen des Transportfahrzeugs gegen die Runge 1 ausgeübte Kräfte werden nun vom Rungenfuß 2 über die stabilen Verriegelungsführungen 6 und 7 in den Rungenschuh 3 und somit in den unteren Aufbauteil des Transportfahrzeugs abgeleitet. Durch die stabile Konstruktion der Verriegelung können auch große Kräfte schadlos aufgenommen werden.

Zum Entriegeln der Runge 1 wird nach Lösen der Sicherung 16 der Riegelhebel 4 wiederum nach unten verschwenkt, wobei die Riegelnasen 9 aus den Aufnahmen 5 im Rungenschuh 3 herausbewegt werden und der Rungenfuß 2 entlang den Verriegelungsführungen 6 und 7 relativ zum Rungenschuh 3 nach schräg nach unten und außen verschoben wird, bis die entriegelte Position aus Figur 4 erreicht ist.

In den Figuren 4 bis 9 ist besonders in den Schnittdarstellungen ersichtlich, dass am Riegelhebel 4 das Langloch 11 ausgebildet ist, das mit der Achse 8 am Rungenfuß 2 zusammenwirkt. Durch die Verlagerbarkeit des Riegelhebels 4 relativ zu der Achse 8 mittels des Langlochs 11 ist das Einführen der Riegelnasen 9 in die Aufnahmen 5 im Rungenschuh 3 wesentlich vereinfacht, da ein Abstand zwischen Rungenfuß 2 und Rüngenschuh 3 zu Beginn des Verriegelns sowie geringe Toleranzfehler und Verkantungen durch diese relative Beweglichkeit ausgeglichen werden können.

Zudem wird durch das Langloch 11 im Riegelhebel 4 im Zusammenwirken mit den Riegelnasen 9, den Aufnahmen 5 und den Verriegelungsführungen 6 und 7 erreicht, dass ein selbsttätiges Herabgleiten des Rungenkörpers 10 in den Führungen 6 und 7 praktisch unterbunden ist, da im verriegelten Zustand und beim Entriegeln der Rungenkörper 10 sich unter seinem eigenen Gewicht immer nur so weit nach unten verlagert, wie es die Führungen 6 und 7 und die Achse 8 im Zusammenwirken mit dem Langloch 11 zulassen. Ein gefährliches selbsttätiges Herausgleiten des Rungenfußes 2 aus dem Rungenschuh 3 ist so dauerhaft und zuverlässig vermieden.

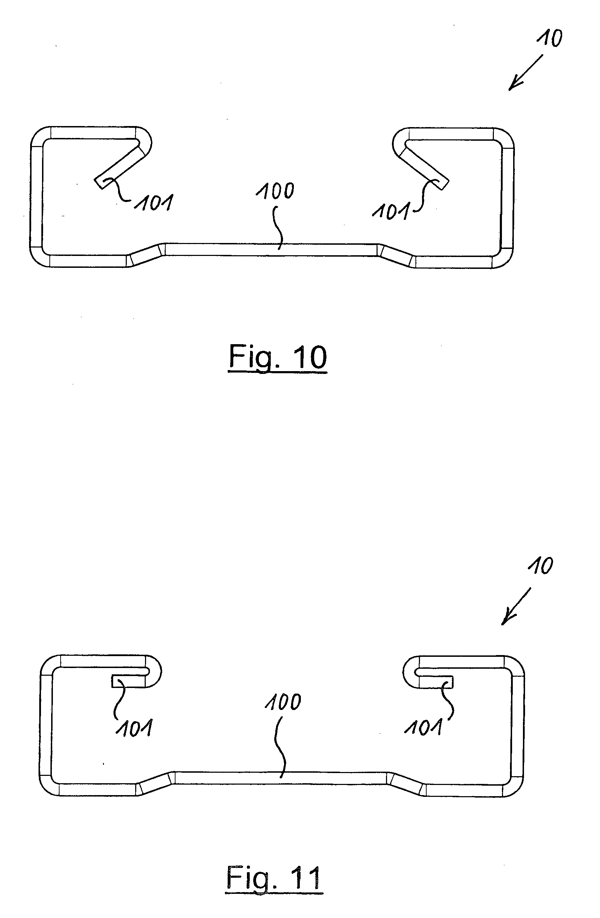

Der in Figur 1 teilweise sichtbare Rungenkörper 10 kann gemäß den in den Figuren 10 und 11 gezeigten Beispielen als Kantprofil oder Rollprofil aus Stahlblech gefertigt sein. Bei beiden Ausführungen ist das Profil mit einem C-förmigen, zum Fahrzeuginneren hin, d.h. in Figur 10 und 11 nach oben hin, offenen Querschnitt ausgebildet. Ein außen liegender Rückenteil 100 des Rungenkörpers 10 ist zum Fahrzeuginneren hin eingezogen oder eingedrückt. Zwei freie Kanten 101 des Rungenkörpers 10 sind zum Rungeninneren hin ein- oder umgebogen. Dadurch wird der Rungenkörper 10 in beiden Ausführungen bei geringem Gewicht sehr biegesteif und hoch belastbar.

**Bezugszeichenliste:**

| Zeichen | Bezeichnung |
|---|---|
| | |
| 1 | Runge |
| 2 | Rungenfuß |
| 3 | Rungenschuh |
| 31 | Bohrungen in 3 |
| 4 | Riegelhebel |
| 41 | Eingriffsarm von 4 |
| 42 | Betätigungsarm von 4 |
| 5 | Aufnahme(n) für 9 |
| 6 | Verriegelungsführung an 2 |
| 7 | Verriegelungsführung an 3 |
| 8 | Achse |
| 9 | Riegelnase(n) an 41 |
| 10 | Rungenkörper |
| 100 | Rückenteil von 10 |
| 101 | freie Kanten von 10 |
| 11 | Langloch in 4 |
| 12 | Einlaufbereiche an 5 |
| 13 | Steg |
| 14 | Verbreiterung von 13 |
| 15 | Einlaufschrägen an 14 |
| 16 | Sicherung an 4 |
| 17 | Bohrungen in 10 |
| 18 | Lattentasche(n) |
| V | Verschwenkrichtung von 4 |
| S | Verschieberichtung von 4 |

## Patentansprüche

1. Runge (1) eines Transportfahrzeugs, mit einem oberen Rungenende, das an einer seitlichen Kante eines oberen Aufbauteils des Transportfahrzeugs verschiebbar gehaltert ist, und mit einem Rungenfuß (2) zur Zusammenwirkung mit einem Rungenschuh (3), der an einer seitlichen Kante eines unteren Aufbauteils des Transportfahrzeugs angeordnet ist, wobei der Rungenfuß (2) mit einer Riegeleinrichtung am Rungenschuh (3) verriegelbar ist, wobei an der Runge (1) ein relativ zu dieser verschwenkbarer zweiarmiger Riegelhebel (4) mit einem Eingriffsarm (41) und einem Betätigungsarm (42) angelenkt ist, wobei der Riegelhebel (4) unmittelbar am Rungenfuß (2) auf einer an diesem angebrachten Achse (8) schwenkbar gelagert ist, wobei an dem Eingriffsarm (41) mindestens eine Riegelnase (9) ausgebildet ist, die in eine korrespondierende Aufnahme (5) im Rungenschuh (3) in Eingriff bringbar ist, und wobei am Rungenschuh (3) und am Rungenfuß (2) Verriegelungsführungen (6, 7) ausgebildet sind, die durch Verschwenken des Riegelhebels (4) in einer Verriegelungsrichtung unter Anheben der Runge (1) in gegenseitigen Eingriff bringbar und durch Verschwenken des Riegelhebels (4) in einer Entriegelungsrichtung unter Absenken der Runge (1) außer Eingriff bringbar sind,
**dadurch gekennzeichnet,**
**dass** im Riegelhebel (4) ein eine Verlagerung des Riegelhebels (4) in seiner Längsrichtung relativ zu der Achse (8) ermöglichendes Langloch (11) ausgebildet ist, durch welches die Achse (8) verläuft.

2. Runge nach Anspruch 1, **dadurch gekennzeichnet, dass** die Riegelnase (9) hakenförmig gebogen ist und die Aufnahme (5) eine korrespondierende Bogenform aufweist.

3. Runge nach Anspruch 1 oder 2, **dadurch gekennzeichnet, dass** am Riegelhebel (4) mit Abstand nebeneinander zwei Riegelnasen (9) und im Rungenschuh (3) mit Abstand nebeneinander zwei Aufnahmen (5) angeordnet sind.

4. Runge nach Anspruch 3, **dadurch gekennzeichnet, dass** zwischen den zwei Aufnahmen (5) am Rungenschuh (3) ein Steg (13) ausgebildet ist, der an seiner dem Rungenfuß (2) zugewandten Seite eine Verbreiterung (14) mit seitlichen konischen Einlaufschrägen (15) aufweist.

5. Runge nach einem der Ansprüche 1 bis 4, **dadurch gekennzeichnet, dass** an den Aufnahmen (5) trichterförmige Einlaufbereiche (12) ausgebildet sind.

6. Runge nach einem der Ansprüche 1 bis 5, **dadurch gekennzeichnet, dass** die Verriegelungsführungen (6, 7) schräg von unten außen nach oben innen verlaufen.

7. Runge nach einem der Ansprüche 1 bis 6, **dadurch gekennzeichnet, dass** die Verriegelungsführungen (6, 7) in Form von Nuten und Federn ausgeführt sind.

8. Runge nach einem der Ansprüche 1 bis 7, **dadurch gekennzeichnet, dass** der Rungenfuß (2), der Rungenschuh (3) und der Riegelhebel (4) oder wenigstens dessen Eingriffsarm (41) Metallgussteile, insbesondere Feingussteile, und/oder gefräste Metallteile sind.

9. Runge nach einem der Ansprüche 1 bis 8, **dadurch gekennzeichnet, dass** eine zusätzliche mechanische Sicherung (16) zum Festlegen des Riegelhebels (4) in seiner Verriegelungsstellung vorgesehen ist.

10. Runge nach einem der Ansprüche 1 bis 9, **dadurch gekennzeichnet, dass** der Rungenkörper (10) aus einem einstückigen Kant- oder Rollprofil mit einem C-förmigen, zum Fahrzeuginneren hin offenen Querschnitt gebildet ist, wobei ein außen liegender Rückenteil (100) des Rungenkörpers (10) zum Fahrzeuginneren hin eingezogen oder eingedrückt ist und wobei zwei freie Kanten (101) des Rungenkörpers (10) zum Rungeninneren hin ein- oder umgebogen sind.

11. Runge nach einem der Ansprüche 1 bis 10, **dadurch gekennzeichnet, dass** an dem Rungenkörper (10) seitlich in einem Raster Bohrungen (17) angebracht sind und dass eine oder mehrere Lattentaschen (18) mittels mit ausgewählten Bohrungen (17) zusammenwirkender Verbindungsmittel an dem Rungenkörper (10) befestigbar oder befestigt sind.

## Claims

1. A stanchion (1) for a transport vehicle, comprising an upper stanchion end, which is held moveably at a lateral edge of an upper structural part of the transport vehicle and comprising a stanchion foot (2) for interacting with a stanchion shoe (3), which is arranged at a lateral edge of a lower structural part of the transport vehicle, wherein the stanchion foot (2) can be interlocked with a locking device at the stanchion shoe (3), wherein a two-armed locking lever (4), which comprises an engaging arm (41) and an actuating arm (42), is hinged at the stanchion (1) so as to be pivotable relative thereto, wherein the locking lever (4) is pivotably supported directly on the stanchion foot (2) on an axle (8), which is attached thereto, wherein at least one locking lug (9), which can be engaged with a corresponding accommodation (5) in the stanchion shoe (3), is embodied on the engaging arm (41), and wherein locking guides (6, 7) are embodied on the stanchion shoe (3) and on the stanchion foot (2), said locking guides being capable of being brought into mutual engagement by pivoting the locking lever (4) in a locking direction by lifting the stanchion (1) and being capable of being disengaged by pivoting the locking lever (4) in an unlocking direction by lowering the stanchion (1),
**characterized in**
**that** an elongated hole (11), which allows a displacement of the locking lever (4) in the longitudinal direction thereof relative to the axle (8) and through which the axle (8) runs, is embodied in the locking lever (4).

2. The stanchion according to claim 1, **characterized in that** the locking nose (9) is curved in a hook-shaped manner and that the accommodation (5) encompasses a corresponding curved shape.

3. The stanchion according to claim 1 or 2, **characterized in that** two locking noses (9) are arranged at a distance next to one another at the locking lever (4) and that two accommodations (5) are arranged at a distance next to one another in the stanchion shoe (3).

4. The stanchion according to claim 3, **characterized in that** a web (13) is embodied between the two accommodations (5) on the stanchion shoe (3), said web encompassing a widening (14) comprising lateral conical sloping lead-in surfaces (15) on its side, which faces the stanchion foot (2).

5. The stanchion according to any one of claims 1 to 4, **characterized in that** funnel-shaped lead-in areas (12) are embodied on the accommodations (5).

6. The stanchion according to any one of claims 1 to 5, **characterized in that** the locking guides (6, 7) run at an angle from the bottom on the outside to the top on the inside.

7. The stanchion according to any one of claims 1 to 6, **characterized in that** the locking guides (6, 7) are embodied in the shape of keys and slots.

8. The stanchion according to any one of claims 1 to 7, **characterized in that** the stanchion foot (2), the stanchion shoe (3) and the locking lever (4) or at least the engaging arm (41) thereof are cast metal parts, in particular precision cast parts, and/or milled metal parts.

9. The stanchion according to any one of claims 1 to 8, **characterized in that** provision is made for an additional mechanical lock (16) for fixing the locking lever (4) in its locked position.

10. The stanchion according to any one of claims 1 to 9, **characterized in that** the stanchion body (10) is formed from a one-piece flanged or rolled profile comprising a C-shaped cross section, which is open towards the vehicle interior, wherein a back part (100) of the stanchion body (10), which is located on the outside, is retracted or pushed in towards the vehicle interior and wherein two free edges (101) of the stanchion body (10) are bent in or over towards the stanchion interior.

11. The stanchion according to any one of claims 1 to 10, **characterized in that** boreholes (17) are arranged on the stanchion body (10) laterally in a grid and **in that** one or a plurality of slat pockets (18) can be fastened or are fastened to the stanchion body (10) by means of connecting means, which interact with selected boreholes (17).

## Revendications

1. Rancher (1) d'un véhicule de transport, avec une extrémité supérieure de rancher, qui est montée de manière coulissante sur une arête latérale d'une partie supérieure de la superstructure du véhicule de transport, et avec un pied de rancher (2) destiné à agir conjointement avec un sabot de rancher (3), qui est monté sur une arête latérale d'une partie inférieure de la superstructure du véhicule de transport, et dont le pied de rancher (2) peut être verrouillé par un dispositif de verrouillage au sabot de rancher (3), et dont est monté au rancher (1) sous forme d'articulation un levier de verrouillage (4) à deux bras, pouvant pivoter par rapport au rancher (1), avec un bras d'engagement (41) et un bras d'actionnement (42), et dont le levier de verrouillage (4) est monté sur palier de manière à pouvoir pivoter à proximité immédiate du pied de rancher (2) sur un axe (8) monté sur celui-ci, et dont le bras d'engagement (41) possède au moins un mentonnet de verrouillage (9) qui peut être engagé dans un logement (5) correspondant du sabot de rancher (3), et dont le sabot de rancher (3) et le pied de rancher (2) comportent des guides de verrouillage (6, 7) qui peuvent être amenés en engagement mutuel en pivotant le levier de verrouillage (4) dans une direction de verrouillage en relevant le rancher (1), et qui peuvent être dégagés en pivotant le levier de verrouillage (4) dans une direction de déverrouillage en abaissant le rancher (1),
**caractérisé en ce,**
**que** le levier de verrouillage (4) comporte un trou oblong (11) traversé par l'axe (8) et permettant un décalage du levier de verrouillage (4) dans sa direction longitudinale par rapport à l'axe (8).

2. Rancher selon la revendication 1, **caractérisé en ce, que** le mentonnet de verrouillage (9) est courbé en forme de crochet et que le logement (5) comporte une forme arquée correspondante.

3. Rancher selon la revendication 1 ou 2, **caractérisé en ce, que** deux mentonnets de verrouillage (9) sont agencés avec un écart côte à côte au levier de verrouillage (4) et que deux logements (5) sont agencés avec un écart côte à côte au sabot de rancher (3).

4. Rancher selon la revendication 3, **caractérisé en ce, qu'**une traverse (13) est formée au sabot de rancher (3) entre les deux logements (5), ladite traverse possédant un élargissement (14) avec des biseaux coniques latéraux d'entrée (15) à son côté dirigé vers le pied de rancher (2).

5. Rancher selon une des revendications 1 à 4, **caractérisé en ce, que** des zones d'entrée en forme d'entonnoir (12) soient formées aux logements (5).

6. Rancher selon une des revendications 1 à 5, **caractérisé en ce, que** les guides de verrouillage (6, 7) possèdent une surface qui chemine de l'extérieur du bas vers l'intérieur du haut.

7. Rancher selon une des revendications 1 à 6, **caractérisé en ce, que** les guides de verrouillage (6, 7) sont conçus en forme de rainures et de languettes.

8. Rancher selon une des revendications 1 à 7, **caractérisé en ce, que** le pied de rancher (2), le sabot de rancher (3) et le levier de verrouillage (4) ou au moins son bras d'engagement (41) sont des pièces coulées en métal, et en particulier des pièces réalisées par un procédé de coulée de précision, et/ou des pièces métalliques réalisées par fraisage.

9. Rancher selon une des revendications 1 à 8, **caractérisé en ce, que** soit prévue une sûreté mécanique supplémentaire (16) destinée à immobiliser le levier de verrouillage (4) dans sa position de verrouillage.

10. Rancher selon une des revendications 1 à 9, **caractérisé en ce, que** le corps du rancher (10) soit formé par un profilé plié ou roulé en une pièce dont la section ouverte en forme de C est dirigée vers l'intérieur du véhicule, et dont une face dorsale extérieure (100) du corps du rancher (10) est rétreinte ou matricée vers l'intérieur et dont deux arêtes libres (101) du corps du rancher (10) sont pliées vers l'intérieur du rancher.

11. Rancher selon une des revendications 1 à 10, **caractérisé en ce, que** le corps du rancher (10) comporte des perçages (17) latéraux agencés suivant une trame et qu'une ou plusieurs poches pour lattes (18) puissent être fixées ou sont fixées à l'aide de perçages (17) sélectionnés des moyens d'assemblage agissant conjointement au corps du rancher (10).
